Europäisches Patentamt

European Patent Office

Office européen des brevets

(11) Publication number: **0 496 109 A2**

# EUROPEAN PATENT APPLICATION

(21) Application number: **91122227.1**

(22) Date of filing: **24.12.91**

(51) Int. Cl.⁵: **C08G 65/32**, C08G 65/48

(30) Priority: **26.12.90 US 634109**

(43) Date of publication of application:
**29.07.92 Bulletin  92/31**

(84) Designated Contracting States:
**AT BE CH DE DK ES FR GB GR IT LI LU NL SE**

(71) Applicant: **UNION CARBIDE CHEMICALS & PLASTICS TECHNOLOGY CORPORATION, Three Cristina Centre 201 North Walnut Street Wilmington, Delaware 19801(US)**

(72) Inventor: **Timberlake, John Foushee 5321 Glow Drive Cross Lane, West Virginia 25313(US)**
Inventor: **Miller, Glen Alan 2225 West Washington Street Charleston, West Virginia 25312(US)**

(74) Representative: **Barz, Peter, Dr. et al Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8 W-8000 München 40(DE)**

(54) **A process for producing alkoxysilane-terminated polyethers.**

(57) A process for producing polyethers having alkoxysilane-terminated end groups which comprises coupling together high molecular weight allyl-started monols and thereafter performing a hydrosilation reaction.

The present invention generally relates to a process for producing high molecular weight polyethers having alkoxysilane terminated end groups. More practically, the invention relates to a process whereby high molecular weight allyl-started monols are coupled together and thereafter undergo hydrosilation to form a high molecular weight polyether having alkoxysilane-terminated end groups.

There are both two-component and one-component types of sealing or adhesive materials which can vulcanize at ambient temperatures. In the two component systems, it is necessary to mix a main component and a vulcanizer prior to use. This leads to many disadvantages such as the necessity to use the mixture promptly, non-reproducible mixing and measuring and variations in properties such as viscosity build and adhesion. Single component-type materials generally overcome these disadvantages. An example of a single-component sealant is a polymeric substance having isocyanate end groups. However, the isocyanate-terminated polymers cure upon exposure to atmospheric moisture and thus can form bubbles due to generated carbon dioxide, resulting in poor adhesion. Since the vulcanizing velocity is relatively slow for these materials acceleration can generate increased bubble formation. Moreover, this system cannot be used above 80°C since the thermal stability of the resulting polymer is poor.

A sealing compound which solves the above difficulties is polysiloxanes having silicon end groups with one or more hydrolyzable groups. The polysiloxane polymer is able to vulcanize rapidly by contact with atmospheric moisture without producing bubble formation due to evolved gases. The adhesive and thermal stability properties are considered to be excellent. The main disadvantages are high cost and leaching of unincorporated silicon fluids onto the substrate, causing staining.

A polymer system whose main chains do not consist of expensive polysiloxane units but rather consists of organic polymers with silicon end groups and at least one hydrolyzable group is described in U.S. Patent No. 3,971,751. This patent describes polyethers terminated at both ends with groups which contain at least one hydrolyzable moiety. Three methods for producing such materials are known and are described in U.S. Patent Nos. 3,632,557; 3,592,795 and 3,408,321, and U.S. Patent Nos. 3,971,751 and 3,951,888.

In U.S. Patent No. 3,632,557 a polyether polyol having hydroxyl end groups is reacted with a diisocyanate such as toluene diisocyanate to yield an isocyanate-terminated prepolymer. Molecular weight building is done by isocyanate-coupling, a process well known to those skilled in the art. Reaction of this prepolymer with a special organosilicon compound which has at least one NCO reactive group and at least one silicon group containing hydrolyzable moieties such as $\gamma$-aminopropyltrimethoxysilane yields the desired silane terminated polyether useful as a single component sealing material. This method has a number of disadvantages. The isocyanate and organosilicon materials are expensive and difficult to handle. Since it is desirable to have the molecular weight of the polymer in excess of 10,000 to obtain a sufficient elongation in the end use, the polyols are coupled with urethanes linkages. Unfortunately, the urethane linkages tend to form hydrogen bonds resulting in high viscosities and low elongations. The urethane linkages also have an unfavorable impact on the product's thermal, mechanical and photolytic stabilities.

In U.S. Patent Nos. 3,592,795 and 3,408,321 an olefin end group is attached to a polyether polyol by means of urethane linkages. The olefin-terminated polymer is then hydrosilated to the desired silicon terminated polymer. The olefin-terminated polymers can be prepared in several ways. An isocyanate-terminated prepolymer as described above may be treated with an olefin with an isocyanate-reactive substituent such as allyl alcohol. Alternatively, a polyol may be reacted with an isocyanate containing an olefin end group such as allyl isocyanate. After reacting a polyether with hydroxyl end groups with sufficient diisocyanate to build molecular weight the remaining hydroxyls are reacted with the allyl isocyanate to generate an ally-terminated polymer. Analogous ester and carbonate routes are also described. This method suffers some of the same disadvantages as that described in the '557 patent due to the urethane links. Since polyoxypropylene glycol is the preferred starting polymer, significant molecular weight building is required to achieve desirable elongations which involves incorporation of a significant number of urethane linkages.

In U.S. Patent Nos. 3,971,751 and 3,951,888 the key olefin-terminated intermediate is produced via a Williamson ether synthesis. Hydroxyl-terminated polymers such as polyether polyols are deprotonated by one of a number of reagents to produce the corresponding polyalkoxides. Subsequent reaction with polyhalogenated alkanes such as methylene chloride permits molecular weight building if required. Treatment of the resulting alkoxide with halogen-containing olefins such as allyl chloride results in olefin-terminated polymers. Advantageously, the olefin is linked to the polymer by stable unreactive ether linkages. Hydrosilation of this material gives the desired silane-terminated product. However, the product from this method contains significant amounts of salt by-products which must be removed. Salt separation is not trivial; the product must be diluted with 2-3 volumes of hexane, acidified to pH 1.5, digested, and filtered or centrifuged (see for instance Japanese Pat. No. 54032597, 58168623). The refined product has a significant number of acetal links derived from methylene chloride which may become the site of peroxide

2

formation or hydrolysis. Molecular weight control is difficult since accurate and reproducible methylene chloride addition is required. Furthermore, the resulting broad molecular weight distribution results in increased viscosity.

Several other routes to olefin-terminated polyethers have been reported. Olefin terminated polyethers of molecular weights up to 20,000 are alleged in U.S. Patent No. 4,774,356, although the molecular weights reported in the examples are less than 1500. This process uses aluminum porphyrin catalysts to generate high molecular weight polyols which are capped with allyl groups via conventional Williamson ether synthesis or similar methods. This route suffers from very long reaction times to generate high molecular weight material, the use of extremely expensive and unrecoverable catalysts, and somewhat broad product molecular weight distributions. An improved process described in EP-196565-Al gives suitably high molecular weight allyl terminated polypropylene oxide with narrow molecular weight distribution, but the expensive catalyst, slow reaction rate and low capping efficiency make this process unsuitable for commercial production.

An in situ coupling of monols to generate allyl-terminated polymers is taught in EP-196565-Al wherein allyl alcohol-started polymerization is terminated by a dihalocarbon added with the alkylene oxide which terminates the catalyst at the end of polymerization. This route also suffers from the deficiencies noted above. In addition, the halogen-containing olefinic group such as allyl chloride must be added to insure complete allyl capping.

The only known example of urethane-coupled silane-terminated polyethers is taught in U.S. Patent Nos. 4,513,061 and 4,496,611 which teach reacting polyisocyanates with $HS(CH_2O)_3Si(OMe)_3$. The resulting low molecular weight product is used as an additive to improve adhesion and light stability of primer or sealant compositions. The intent of U.S. Patent Nos. 4,513,061 and 4,496,611 is to incorporate light absorbing urethane links into the polyol and increase the adhesion properties, not to generate the polymer backbone.

The present invention teaches the use of coupling high molecular weight allyl-started monols to generate ultrahigh molecular weight allyl-terminated polymers. These materials are useful in the preparation of silyl-terminated polyethers.

An object of the present invention is to provide a high molecular weight polyether having alkoxysilane terminated end groups in a simplified process which generates fewer by-products.

Another object of the invention is to minimize the number of coupling linkages subject to secondary reactions.

Other objects of the invention will become more apparent from the description and examples which follow.

The present invention provides a process for producing high molecular weight polyethers having alkoxysilane terminated end groups. This process comprising coupling together allyl-started monols having molecular weights from 1,500 to 10,000 with an isocyanate, methylene chloride or a carbonate and thereafter hydrosilating the polyether with an alkoxysilane.

The allyl-started polyethers can be produced by any conventional means. It is preferred that the allyl-started monol have a molecular weight in excess of 4000, although lower molecular weights may be useful. The lowest molecular weight limit should be 1500. The upper limit on the molecular weight would be 10,000 although 8,000 is preferred for the upper limit. A 10,000 molecular weight monol would thus provide a 20,000 molecular weight coupled polyether. These high molecular weight polyethers are soft, flexible polymers which provide joint movement of 100% or more as required in high performance construction sealants. Polyethers produced with acid or base catalysis generally will need to have the catalyst removed prior to coupling. Conventional catalysts such as potassium hydroxide generally do not produce quality polypropylene oxide materials (the preferred polymer backbone) above 4000 molecular weight which limits the quality of the sealants which can be produced with these polymers.

An extremely efficient catalyst for producing very high molecular weight polyethers with very narrow molecular weight distributions is described in U.S. Patent No. 3,829,505. This patent teaches the use of double metal cyanide complexes such as zinc hexacyanocobaltate as the catalyst for the polymerization of epoxide and oxetane monomers onto a wide variety of starters, such as glycols. Molecular weights as high as 150,000 are reported. Polyethers prepared via the zinc hexacyanocobaltate catalyst have narrow molecular weight distributions which result in lower product viscosity and avoid the need for additional processing steps generally associated with molecular weight building. It has been found that this catalyst system can produce very high molecular weight allyl-started polyethers with molecular weights in excess of 8,000. Potassium hydroxide can also be used as a catalyst but is not preferred since' above about 2000 molecular weight the products become difficult to prepare.

Diols usually present as an impurity in the allyl-started polyether are incorporated into the polymer network and would not be detrimental to the end use properties. In fact, diols or small amounts of triols can be added for additional molecular weight building or increased functionality and crosslinking if desired. Coupling agents with functionalities greater than two such as polymeric MDI or polyhalogenated hydrocarbons could also be used to generate molecules with more than two silyl groups per molecule for increased crosslinking.

Although monols having groups other than allyl which can undergo hydrosilation after coupling are useful, such as alcohols containing styrene groups, those having allyl groups are most common and therefore preferred.

Treating the allyl-started polyether with a diisocyanate will produce a high molecular weight allyl-terminated polyether with only one urethane linkage in the backbone. The final product has no unreacted isocyanate, so the end user is not exposed to any free isocyanate. Since the number of urethane linkages are greatly reduced over the preexisting coupled products undesirable reactions are similarly reduced such as hydrolysis or radical cleavage. A broad range of allyl-terminated products with reproducibly narrow molecular weight distributions are capable of being prepared via this route. The use of aliphatic or aromatic polyisocyanates would be determined by the expense and the desired reactivity and environmental stability.

Hydrosilylation of the allyl-terminated MDI-coupled polyethers goes smoothly. High color formation is frequently observed upon the addition of the catalyst, but the formulated product was not discolored by the polyether. IR analysis indicates nearly complete conversion of the starting allyl moiety, although a significant amount (up to 15%) of allyl-to-propenyl rearrangement is also observed. Propenyl groups do not undergo hydrosilation under these conditions. Propenyl-terminated polyethers act as chain terminators and are detrimental to formulated product properties. The level of propenyl formation was comparable to that seen in other hydrosilations.

The monols may also be coupled with halogenated methanes such as methylene chloride, methylene bromide or chloroform in which case only one acetal linkage is inserted into the resulting polymer backbone. Other coupling methods include the use of carbonates. The choice of the coupling mechanism will depend upon the specific application the final product will be utilized for as well as whatever constraints may exist in terms of costs and handling the coupling materials. Generally, halogenated methanes such as methylene chloride, methylene bromide and chloroform to name but a few are preferred over the isocyanates. As between the isocyanates, aliphatic isocyanates are preferred over the aromatic isocyanates. Finally, carbonate coupling followed by conversion to the ether is most desirable except for the difficulties expected in commercially practicing the coupling and conversion mechanism.

Useful alkoxy silanes for the hydrosilation include trimethoxysilane, methyldimethoxysilane, vinyltrimethoxysilane, methyldiethoxysilane and triethoxysilane to name but a few. Preferably methyldimethoxysilane is employed.

A silanol condensation catalyst may be incorporated in the composition of the present invention as a hardener to provide a one component room temperature curing composition. Examples of the silanol condensation catalyst are, for instance, a metal salt of a carboxylic acid such as tin octylate, tin stearate, iron napthenate or lead octylate, a tetravalent organotin such as di-n-butyl tin dilaurate or di-n-butyl tin diphthalate, an amine such as laurylamine or ethanolamine, and alkyltitanates. These catalysts may be employed alone or in admixture.

Usual fillers and usual plasticizers may also be incorporated in the composition of the present invention. Examples of the filler used in the present invention are, for instance, calcium carbonate, kaolin, talc, titanium dioxide, aluminum silicate, carbon black, and the like. The filler is employed in an amount of 0 to 300 parts by weight, especially 0.1 to 300 parts by weight, per 100 parts by weight of the alkoxysilane-terminated polyether. Examples of the plasticizer used in the present invention are, for instance, dioctyl phthalate, butylbenzyl phthalate, chlorinated paraffin, epoxidized soybean oil, and the like. The plasticizer is employed in an amount of 0 to 200 parts by weight, especially 0.1 to 200 parts by weight, per 100 parts by weight of the alkoxysilane-terminated polyether. In the present invention, fillers and plasticizers can be employed without previously dehydrating them. If it is possible to decrease the water content by a simple procedure, fillers and plasticizers dehydrated by a procedure such as heat drying may be of course employed.

The composition of the present invention may contain various other additives, e.g. antisagging agent such as hydrogenated castor oil or silicic acid anhydride, antioxidant, ultraviolet absorbent, radical inhibitor, and a peroxide decomposer. For the purpose of adjusting the physical properties of the cured product, the composition of the invention may also contain reactive silicon compounds, polysiloxanes and ultraviolet radiation curing resins to name but a few.

Elongation, tensile strength and hardness are sealant properties that are critical.

Whereas, the exact scope of the instant invention is set forth in the appended claims, the following specific examples illustrate certain aspects of the present invention and, more particularly, point out methods of evaluating the same. However, the examples are set forth for illustration only and are not to be construed as limitations on the present invention except as set forth in the appended claims. All parts and percentages are by weight unless otherwise specified.

EXAMPLES

1. Definitions: As used in the following examples, the following abbreviations are defined below:

BHT -- 4-methyl-2,6-di-tert-butylphenol

VTMS -- vinyltrimethoxysilane

AEPTMS -- N-(2-aminoethyl)-3-aminopropyltrimethoxysilane

DBTD -- dibutyltindilaurate

WAX -- polyamide wax (sold by King Industries as Dislon 6500).

PCC -- precipitated calcium carbonate, ⟨0.1 micron particle size, stearic acid treated.

$TiO_2$ -- titanium dioxide, rutile sold by DuPont as R-960.

2. General Procedure: All chemical transformations were done under a nitrogen atmosphere unless otherwise indicated. Sealant formulation preparations and testing were performed in air or under controlled atmospheric conditions. Sodium methoxide in methanol, methylene chloride, methyldimethoxy silane, 1500 MWt allyl-started monol (40HA-450), 200 MWt allyl alcohol-started all propylene oxide monol (APPG-200), 5000 MWt polyether generated from APPG-200 (APPG-5000), 8000 MWt polyether generated from APPG-200 (APPG-8000), (bis-4-isocyanatophenyl)methane, (Flake-MDI) bis(4-isocyanatocyclohexyl)methane Desmodur-W (HI2-MDI), and solvents were used as received. Chloroplatinic acid was used as a solution in HPLC-grade isopropanol.

Example 1 - APPG-5000 (1010g, 0.25 moles) was charged to a dry flask equipped with a nitrogen inlet, a mechanical stirrer and a thermometer. Flake MDI (31.8 g, 0.127 moles) was added and the mixture heated and stirred at 60°C until the MDI was melted. Dibutyltin dilaurate (0.5g) was added. After stirring for 5 hrs at 100°C, IR analysis showed no free NCO or OH remained and the reaction was terminated.

Example 2 - The procedure of Example 1 was used with APPG-8000 and Desmodur-W to give the corresponding urethane-coupled allyl-terminated materials. Further details are in Table 2.

Example 3 - 40HA-450 (645g, 0.43 moles) and sodium methoxide (104g, 0.48 moles) in methanol were charged to a dry flask equipped with nitrogen inlet, a vacuum distillation assembly, a mechanical stirrer and a thermometer. The contents were heated to 60° and subjected to vacuum to remove methanol. After 16 hours, the contents were cooled to 24°C, methylene chloride (20g, 0.24 moles) was added and heating was resumed. After 6 hours, the residual base levels remained unchanged at ca. 50% completion. Excess allyl chloride (55g, 0.72 moles) was added to complete the reaction (6 hours @ 40°C). The crude product was stripped for 2 hours at 40°C to remove residual halocarbons, allyl alcohol, and allyl ethers. Addition of 10 mL of 0.5N HCl followed by heating to 100°C digested the salt by-product which settled out upon standing, allowing decantation of the cloudy red product from the majority of the salt. GPC analysis indicated approximately 40% coupling. Hydroxyl analysis is consistent with 86% capping efficiency. Infrared analysis indicates negligible (<2%) allyl-to-propenyl rearrangement.

Example 4 - A stock solution of the platinum catalyst was prepared by dissolving 0.48g chloroplatinic acid in 10.0 g HPLC-grade isopropanol under dry nitrogen.

Allyl-capped polymer was charged to a dry 2L four-necked flask equipped with a mechanical stirrer, a thermometer,and an addition funnel. The polyether was heated to 50°C and of the chloroplatinic acid solution was added via syringe. The silane addition (20% mole excess) was initiated immediately and the silane was added as fast as possible. An exotherm was usually observed and cooling was often required to maintain the pot temperature between 50-60°C. Only slight color changes are observed, but occasionally a dark color formed. An hour after bubble formation had ceased, the reaction mixture was vacuum stripped before transferring into a dry narrow-neck bottle. Difficulties in analyzing the material by conventional wet chemical methods makes it difficult to assess the reaction efficiency, but IR analysis indicated about 15% of the starting allyl functionality had been converted to propenyl and little if any unreacted allyl material remained. The details are set forth in Table 3.

Example 5 - All sealant compositions are given in Table 4. Dry fillers were added to a double planetary mixer capable of high shear mixing and vacuum operation. The silane-terminated polyether, plasticizer, polyamide wax, and BHT were added. The mixture was stirred for 30 minutes followed by heating to 110°C under vacuum for 2 hours. The mixture was cooled to 40°C, the VTMS and AEPTMS added, and stirring continued for 30 minutes under vacuum. The DBTD and lauryl amine were added and stirring continued for 30 minutes under vacuum. The finished sealant was transfered to foil lined cartridges for later testing.

Example 6 - Sealants were cured in 1/8" plaques for seven days at 23°C and 50% relative humidity followed by 14 days at lab conditions prior to cutting. The cut test specimens were conditioned for 24 hours at 23°C and 50% relative humidity prior to testing.

TABLE 1

STARTING POLYETHER PROPERTIES

| Polyether | APPG-5000 | APPG-8000 |
|---|---|---|
| Starter | APPG-200 | APPG-200 |
| Nominal Functionality | 1 | 1 |
| Nominal MWt | 5,000 | 8,000 |
| Hydroxyl # (mg KOH/g) | 14.1 | 8.0 |
| GPC | | |
| Peak | 3,144 | 3,790 |
| Mn | 3,666 | 4,686 |
| Nw | 4,595 | 5,919 |
| Dispersity | 1.25 | 1.26 |
| Functionality | 1.18 | NM |
| Unsaturation | 0.20 | 0.14 |
| Viscosity (cPs) | 832 | 3,060 |

NM = Not Measured

TABLE 2

| ISOCYANATE-COUPLED ALLYL-STARTED POLYETHERS | | | | | |
|---|---|---|---|---|---|
| Starting Polyether | Isocyanate (grams) | Catalyst (mL) | Reaction Conditions | GPC Mol. Wt. Peak (Dispersity) | Viscosity (cPs @ 25°C) |
| APPG-5000 (1010g) | Flake MDI (31.8) | 5.0 | 100°/5 hrs | 5226 (1.31) | 15,700 |
| APPG-5000 (855g) | H12-MDI* (28.2) | 2.2 | 90°/16 hrs | 6250 (1.47) | 18,700 |
| APPG-8000 (1802g) | Flake MDI (30.8) | 0.5 | 80°/12 hrs | 6707 (1.31) | 16,000 |

*H12-MDI is Desmodur™ --W from Mobay Chemical Co.

6

TABLE 3

ANALYTICAL DATA ON SILICON TERMINATED POLYETHERS

| Coupled Monol | APPG–5000 | APPG–5000 | APPG–8000 |
|---|---|---|---|
| (Grams) | 973 | 756 | 117 |
| Comment | Flake MDI–Coupled | H12–MDI–Coupled | Flake MDI–Coupled |
| Silane | Dimethoxymethyl-silane | Dimethoxymethyl-silane | Dimethoxymethyl-silane |
| (Grams) | 26.9 | 26.2 | 4.6 |
| Catalyst Level (mL) | 2.9 | 2.7 | 0.35 |
| **PRODUCT ANALYSIS** | | | |
| Hydroxyl # (mgKOH/g) | 4.7* | NM | NM |
| Unsaturation (meq/g) | 0.059 | –* | –* |
| Propenyl (meq/g) | 0.015 | –* | $\leq$0.02 |
| % Propenyl[a] | 8 | NM | ca.15 |
| Viscosity[b] (cPs @ 25°C) | 17,500 | 16,100 | 23,900 |

*High interference observed; results are suspect or not reportable.
**Lower than detection limit.
[a]Percent initial unsaturation converted to propenyl ($\pm$3).
[b]Silmod™ 20A viscosity is 14,000 cPs, Silmod™ 300 viscosity is 22,000 cPs.
NM = Not Measured.

TABLE 4

PROPERTIES OF FORMULATED SEALANTS AND CURED POLYMERS

| Silicon Modified Polyether Description | Silmod™ Commercial | MDI-coupled APPG-5000 MDI+Monol | MDI-coupled APPG-8000 * MDI+Monol |
|---|---|---|---|
| Nominal Functionality | ~2.1 | 2 | 2 |
| Nominal Molecular Wt. | 10,000 | 10,000 | 16,000 |
| **Formulation** | | | |
| Silicon Modified Polyether | 100[a] | 100 | 100 |
| Fillers Calcium Carbonate | 120 | 120 | 120 |
| Titanium Dioxide | 20 | 20 | 20 |
| Dioctyl Phthalate | 50 | 50 | 50 |
| Thixotrope, Dislon 6500 | 2 | 2 | 2 |
| BHT | 1 | 1 | 1 |
| VTMS | 6 | 6 | 6 |
| AEPTMS | 3 | 3 | 3 |
| DBTD | 2 | 2 | 2 |
| Lauryl Amine | 0.5 | 0.5 | 0.5 |
| Viscosity (cPs @ 25°C, 0.5 rmp) | >2MM | 1.96MM | >2MM |
| Tack Free Time (hours) | ~4 | ~6 | ~8 |

TABLE 4 (Continued)

PROPERTIES OF FORMULATED SEALANTS AND CURED POLYMERS

| Properties | | | |
|---|---|---|---|
| Tensile Strength (psi) | 186.9 | 253.6 | 182 |
| Elongation (%) | 569 | 475 | 683 |
| Tear (lb/in) | 20.8 | 23.5 | 20.9 |
| Hardness (Shore A) | 22 | 39 | 17 |
| Modulus (psi) @100% elongation | 46.1 | 85.0 | 38.3 |
| @200% elongation | 84.1 | 133.0 | 70.5 |

[a]SILMOD™ Formulation is composed of 60 parts SILMOD™ 20A to 40 parts SILMOD™ 300

TABLE 5

TYPICAL PROPERTIES OF COMMERCIAL
SILMOD™ SILICON MODIFIED POLYETHERS

| Silmod™ polyether grade name | 20A | 300 |
|---|---|---|
| Type | General purpose | Higher modulus |
| Viscosity at 23°C (poise) | 140±40 | 200±40 |
| Specific gravity at 20°C | 1.01 | 1.01 |
| pH value | ~7 | ~7 |

| | |
|---|---|
| Physical state | transparent liquid |
| Color | light yellow |
| Odor | practically none |
| Packing | 440 lbs. net in sealed steel drum |

## Claims

1. A process for producing high molecular weight polyethers having alkoxysilane terminated end groups which comprises
   (a) coupling together two allyl-started monols each having a molecular weight from 1,500 to 10,000 wherein the coupling reactant is selected from the group consisting of halogenated methanes, aliphatic isocyanates, aromatic isocyanates and carbonates; and
   (b) thereafter hydrosilating the coupled polyether with an alkoxysilane.

2. The process of claim 1 wherein the alkoxysilane is selected from the group consisting of trimethoxysilane, methyldimethoxysilane, methyldiethoxysilane, triethoxysilane and vinyltrimethoxysilane.

3. The process of claim 1 or 2 wherein the allyl-started monol has a molecular weight of from 4,000 to 8,000.

4. The process of any of claims 1-3 wherein the allyl-started monol is produced using a double metal cyanide complex.

5. The process of claim 4 wherein the complex is zinc hexacyanocobaltate.

6. The process of any of claims 1-5 wherein methylene chloride is employed as the coupling reactant.

7. The process of any of claims 1-5 wherein an aromatic isocyanate is employed as the coupling reactant.

8. The process of claim 7 wherein bis-(4-isocyanatophenyl)methane is employed as the coupling reactant.

9. The process of any of claims 1-5 wherein a carbonate is employed as the coupling reactant.

10. The process of any of claims 1-5 wherein an aliphatic isocyanate is employed as the coupling reactant.